# EUROPEAN PATENT APPLICATION

(11) **EP 4 132 172 A1**
(43) Date of publication of application: **08.02.2023**
(21) Application number: 21791754.1
(22) Date of filing: 26.02.2021
(51) Int. Cl.: H04W 72/04

(54) **METHOD AND DEVICE FOR BWP CONVERSION, TERMINAL, AND STORAGE MEDIUM**

(30) Priority: 20.04.2020 CN 202010314062
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Ipside
(86) International application number: PCT/CN2021/078160
(87) International publication number: WO 2021/213006

(57) **Abstract**

The embodiments of the present application relate to the technical field of communications. Disclosed are a method and device for BWP conversion, a terminal, and a storage medium. The method comprises: receiving target downlink control information (DCI) transmitted by a network device, the target DCI at least comprising a first BWP, and the target DCI being used for triggering a terminal to perform BWP conversion; enabling a timer-based BWP conversion function on the basis of the target DCI, the timer-based BWP conversion function indicating, when no data transmission is present between a terminal and the network device in a timer duration of a timer, the triggering of the terminal to perfom 1 BWP conversion; and converting a current BWP into a first BWP. By enabling the timer-based BWP conversion function, and ensuring that the terminal can complete the conversion of the BWP as anticipated by the network device, consistency is ensured between the BWP state of the terminal side and the BWP state of the network device side, thus ensuring normal scheduling of the terminal by the network device.

## Description

The present application claims priority of Chinese Patent Application No. 202010314062.5, in the title of "METHOD AND DEVICE FOR BWP SWITCHING, TERMINAL, AND STORAGE MEDIUM", filed on April 20, 2020, the entire contents of which are hereby incorporated by reference in its entirety.

### TECHNICAL FIELD

The present disclosure relates to the field of terminal technologies, and in particular to a BWP switching method, an apparatus, a terminal, and a storage medium.

### BACKGROUND

In the 5th generation mobile networks (5G) protocol, the bandwidth part (BWP) has several triggering conditions, including two BWP switching methods that are based on downlink control information (DCI) and BWP de-activation timer (bwp-InactivityTimer).

Among them, the working mechanism of the bwp-InactivityTimer-based BWP switching method is that when there is transmitted upstream and downstream data arrives, the timer starts to run (resetting to 2ms); and when there is no data transmission, the timer decreases in 1ms as intervals, and until the timer times out, the terminal is triggered to switch from existing BWP to default BWP (or initial BWP). The working mechanism of the DCI-based BWP switching method is that when the terminal receives the DCI sent by a network device for BWP switching, the terminal performs BWP switching according to the DCI, and there is a switching delay duration; for example, the switching delay duration is 3ms, and the terminal does not expect to receive downlink data or send uplink data within this switching delay duration and completes BWP switching within this switching delay duration.

The related art does not suggest how to perform BWP switching when the above two BWP switching methods conflict.

### SUMMARY OF THE DISCLOSURE

The present disclosure provides a BWP switching method, an apparatus, a terminal, and a storage medium.

In an aspect, the present disclosure provides A bandwidth part (BWP) switching method, comprising:
receiving target downlink control information (DCI) from a network device; wherein the target DCI comprises a first BWP, and the target DCI is configured to trigger a terminal to perform a BWP switching;
de-enabling a timer-based BWP switching function according to the target DCI; wherein the timer-based BWP switching function indicates triggering the terminal to perform the BWP switching in response to no data transmission existing between the terminal and the network device within a timer duration of a timer; and
switching a current BWP to the first BWP.

In another aspect, the present disclosure provides a bandwidth part (BWP) switching apparatus, comprising:
a receiving module, configured to receive target downlink control information (DCI) from a network device; wherein the target DCI comprises a first BWP, and the target DCI is configured to trigger the terminal to perform a BWP switching;
a first de-enabling module, configured to de-enable a timer-based BWP switching function according to the target DCI; wherein the timer-based BWP switching function indicates triggering the terminal to perform the BWP switching in response to no data transmission existing between the terminal and the network device within a timer duration of a timer; and
a switching module, configured to switch a current BWP to the first BWP.

In another aspect, the present disclosure provides a terminal, comprising: a processor; a transceiver, connected to the processor; and a memory, storing an instruction executable by the processor; wherein the processor is configured to load and execute the instruction for performing the BWP switching method as above.

In another aspect, the present disclosure provides a computer-readable storage medium, storing an executable instruction; wherein the executable instruction is loaded and executed by a processor to perform the BWP switching method as above.

In another aspect, the present disclosure provides a computer program product or a computer program including a computer instruction, the computer instructions being stored in a computer-readable storage medium. A processor of a terminal reads the computer instruction from the computer-readable storage medium, and the processor executes the computer instruction such that the terminal performs the BWP switching method as above.

### BRIEF DESCRIPTION OF THE DRAWINGS

FIG. 1 is a schematic view of a process of a BWP switching in the related art.
FIG. 2 is a schematic view of a process of a BWP switching according to an embodiment of the present disclosure.
FIG. 3 is a structural block view of a communication system according to an embodiment of the present disclosure.
FIG. 4 is a flowchart of a BWP switching method according to an embodiment of the present disclosure.
FIG. 5 is a flowchart of a BWP switching method according to another embodiment of the present disclosure.
FIG. 6 is a flowchart of a BWP switching method according to further another embodiment of the present disclosure.
FIG. 7 is a flowchart of a BWP switching method according to further another embodiment of the present disclosure.
FIG. 8 is a structural block view of a BWP switching apparatus according to an embodiment of the present disclosure.
FIG. 9 is a structural block view of a terminal according to an embodiment of the present disclosure.

### DETAILED DESCRIPTION

In order to make the purpose, technical solutions and advantages of the present disclosure clearer, the following will be described in further detail in connection with the accompanying drawings.

References to "plurality" in this document refer to two or more. The term "and/or", describing a relationship of associated objects, indicates that three relationships may exist. For example, A and/or B, may indicate: the presence of A alone, the presence of both A and B, and the presence of B alone. The character "/" generally indicates that the associated object before and after is in an "or" relationship.

For ease of understanding, the terms involved in the embodiments of the present disclosure are first briefly introduced.

BWP: The BWP defines a set of consecutive resource blocks starting from a location in the common resource, each BWP corresponding to a set of parameters (subcarrier interval and cyclic prefix length); the BWP is defined to support terminals that do not have the ability to handle the entire carrier bandwidth and to receive bandwidth adaptation. When a terminal is connected to the network, it may be configured with up to 4 downlink BWPs and up to 4 uplink BWPs in each service cell; at any given moment, the service cell will have only one configured downlink BWP called "active downlink BWP", and accordingly, the service cell will have only one configured uplink BWP called "active uplink BWP". It can be seen that only one BWP can be activated at each particular moment, implying the existence of some mechanism for selecting a particular BWP. Exemplarily, BWP switching (or selection) methods may include: BWP switching triggered based on DCI, BWP switching triggered based on timer, BWP switching triggered by radio resource control (RRC) signaling, etc. The embodiments of the present disclosure are mainly concerned with how to avoid conflicts between the two BWP switching methods, i.e., DCI-based and timer-based.

Timer-based BWP switching function: when there is no data transmission between the terminal and the network device, the timer is turned on or reset and decreases in intervals of 1ms until the timer times out, triggering the terminal to switch from the current BWP to the default BWP or the initial BWP. The minimum configuration parameter of the timer is 2ms, i.e., the configuration parameter of the timer may be 3ms, 5ms, etc.

DCI-based BWP switching method: indicating that the network device sends DCI for triggering BWP switching to the terminal; when the terminal receives the DCI, the terminal is triggered to switch from the current BWP to a new BWP, and there is a switching delay duration during the switching from the current BWP to the new BWP; within this switching delay duration, the terminal does not expect to receive downlink data or send uplink data, and the terminal shall complete the BWP switching within the switching delay duration. For example, when the subcarrier interval is 15 KHZ and the switching delay type of the terminal is a second type, the corresponding switching delay duration is 3 slots and the length of each slot is 1ms, i.e., the switching delay duration is 3ms. In some embodiments, the switching delay duration may be determined by an upstream capability of the terminal and a subcarrier interval.

Subcarrier interval: the subcarrier intervals supported by new radio (NR) are 15KHZ, 30KHZ, 60KHZ, 120KHZ, 240KHZ, etc. Different subcarrier intervals correspond to different slot lengths, and different subcarrier intervals correspond to different switching delay durations.

Slot: referring to a time domain structure that constitutes NR, in which a 10ms radio frame is divided into 10 1ms subframes, and the subframe is divided into slots, each of which contains 14 orthogonal frequency-division multiplexing (OFDM) symbols; since the slot is defined as a fixed number of OFDH symbols, higher subcarrier interval leads to shorter slot length. For example, a subcarrier interval of 15 KHZ corresponds to a slot length of 1ms, and a subcarrier interval of 30 KHZ corresponds to a slot length of 0.5ms.

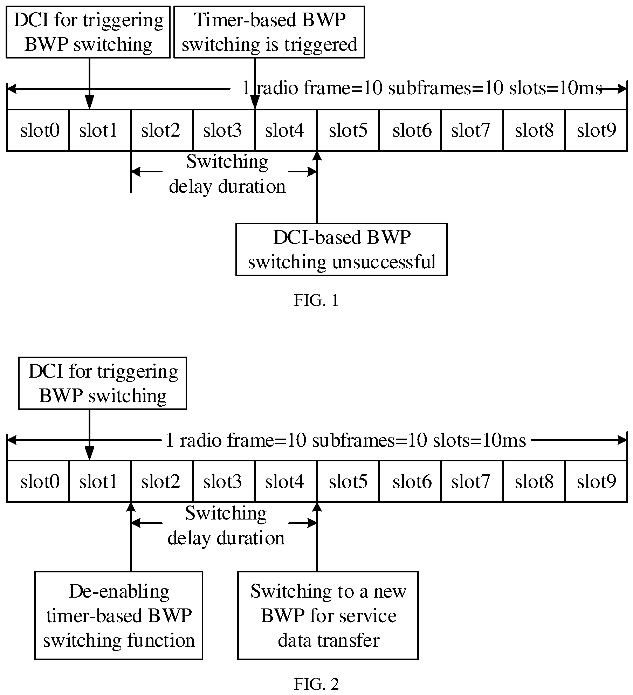

The two BWP switching methods defined in the related art are applied in combination: regarding the DCI-based BWP switching method and timer-based BWP switching method, when the switching delay duration (corresponding to the DCI-based BWP switching method) is greater than the timer duration (corresponding to the timer-based BWP switching method), for example, the switching delay duration is 3ms and the timer duration is 2ms, then during the BWP switching of the terminal according to the DCI, the timer times out because no data transmission is performed between the terminal and the network device, thereby triggering a new BWP switching, causing the process of BWP switching of the terminal according to the DCI to be interrupted, which results in the terminal not completing the BWP switching as expected by the network device. Referring to FIG. 1, FIG. 1 is a schematic view of a process of a BWP switching in the related art. Taking the subcarrier interval of 15 KHZ (corresponding to a slot length of 1ms), the switching delay of the terminal (determined by the upstream capability of the terminal) as the second type (corresponding to a switching delay duration of 3 slots), and the timer duration of 2ms as an example, when the terminal receives the DCI configured to trigger the BWP switching at the moment of slot 1, i.e., not receiving downlink or send uplink data on the original BWP (old BWP) to prepare for the BWP switching, since there is no data transmission between the terminal and the network device, the timer runs and decrements at every 1ms interval until it reaches 2ms; at this time, the timer times out, i.e., the timer-based BWP switching is triggered at the 4th time slot, resulting in the DCI-based BWP switching being interrupted, causing the terminal not to complete the BWP switching (i.e., DCI-based) expected by the network device.

Aiming at the problem of the terminal not being able to achieve BWP switching according to the network device caused by conflict between the two BWP switching methods that may occur in the related art, the present disclosure provides a new BWP switching method. Referring to FIG. 2, FIG. 2 is a schematic view of a process of a BWP switching according to an embodiment of the present disclosure. When the terminal receives the DCI sent by the network device for triggering BWP switching at a moment of slot 1, the terminal de-enables the timer-based BWP switching function, and the terminal does not receive downlink or send uplink data on the original BWP during the switching delay duration to prepare for the BWP switching Since the timer-based BWP switching function has been turned off, even if there is no data transmission between the terminal and the network device, a new BWP switching due to timer timeout will not be triggered. In this way, the terminal can realize the switching of the original BWP to the new BWP for service data transmission.

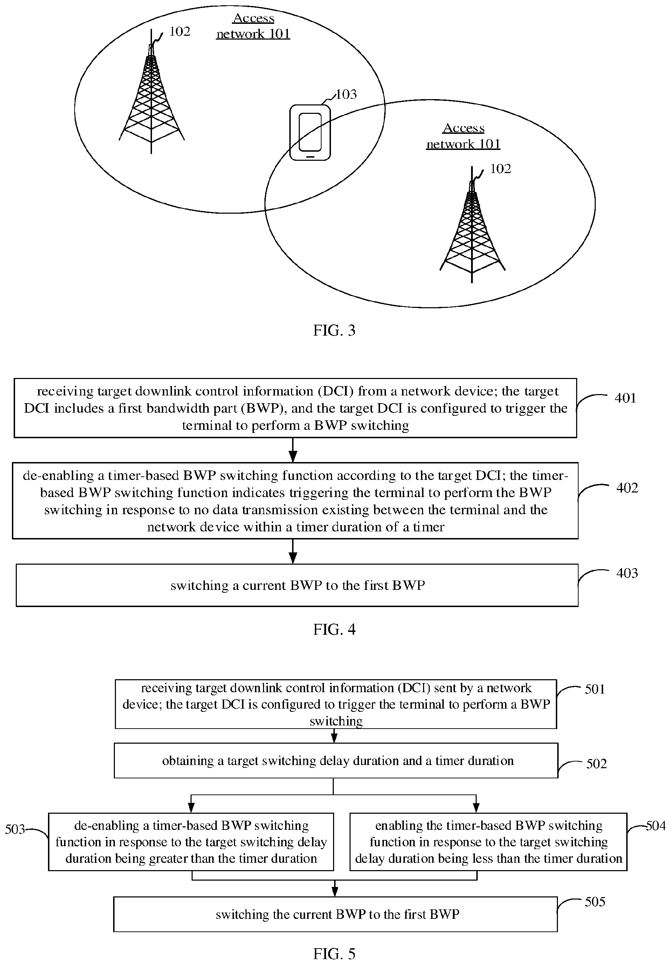

Referring to FIG. 3, FIG. 3 is a structural block view of a communication system according to an embodiment of the present disclosure. The communication system may operate on a license-free frequency band, and the communication system may include: an access network 101 and a terminal 103.

The access network 101 includes multiple network devices 102, which may be base stations, the base stations being devices deployed in the access network to provide radio communication functions to the terminal. The base stations may include various forms of macro base stations, micro base stations, repeater stations, access points, etc. In systems adopted with different radio access technologies, the name of a device with base station functionality may vary, for example, eNodeB or eNB in a long term evolution (LTE) system, or gNodeB or gNB in a 5G NR system. The description "base station" may change as communication technology evolves. For the convenience of description in the embodiments of the present disclosure, the above devices that provide radio communication functions to the terminal 103 are collectively referred to as the network devices.

The terminal 103 may include various handheld devices, in-vehicle devices, wearable devices, computing devices, or other processing devices connected to a wireless modem, as well as various forms of user equipment, mobile stations (MS), terminals, etc., that have radio communication capabilities. For ease of description, the devices mentioned above are collectively referred to as the terminal. The network devices 102 and the terminal 103 communicate with each other via some kind of air interface technology, such as a Uu interface.

It should be noted that the following exemplary embodiments of the present disclosure are illustrated with the terminal and network devices as examples.

Referring to FIG. 4, FIG. 4 is a flowchart of a BWP switching method according to an embodiment of the present disclosure. The method may be applied to the terminal 103 as illustrated in FIG. 3. The method may include operations at blocks illustrated in FIG. 4.

At block 401: receiving target downlink control information (DCI) from a network device; the target DCI includes a first bandwidth part (BWP), and the target DCI is configured to trigger the terminal to perform a BWP switching.

In some embodiments, when the network device is required to schedule the terminal to another BWP for service data transmission, the network device is required to send to the terminal the DCI for controlling the terminal to perform BWP switching, the DCI containing new BWP information, i.e., the first BWP. Correspondingly, when the terminal receives the DCI, the terminal may perform BWP switching based on the first BWP contained in the DCI, i.e., from a current BWP to the first BWP indicated by the DCI.

The DCI is transmitted by a physical downlink control channel (PDCCH), which is a downlink control channel sent by the network device to the terminal through a main carrier.

The DCI contains multiple information domains for indicating different information, including an indication domain configured to indicate the BWP for activating 1 to 4 BWPs configured at a high level.

At block 402: de-enabling a timer-based BWP switching function according to the target DCI; the timer-based BWP switching function indicates triggering the terminal to perform the BWP switching in response to no data transmission existing between the terminal and the network device within a timer duration of a timer.

Since there is a switching delay duration for the terminal to prepare for BWP switching during the DCI-based BWP switching, the terminal does not expect to receive downlink data or send uplink data during the BWP switching process (i.e., within the switching delay duration). Correspondingly, the timer-based BWP switching function will be triggered, such that a new BWP switching may be triggered before the terminal has completed the DCI-triggered BWP switching process, resulting in the terminal not using the BWP according to the network schedule. Therefore, in order to avoid triggering the timer-based BWP switching function, in some embodiments, when the terminal receives the target DCI, the terminal may directly de-enable the timer-based BWP switching function, such that during the BWP switching of the terminal according to the DCI, regardless of whether the switching delay duration exceeds the timer duration, a new BWP switching due to timer timeout will not be triggered, thereby ensuring that the BWP switching of the terminal according to the DCI is carried out normally.

At block 403: switching a current BWP to the first BWP.

In some embodiments, there is a switching delay duration during the BWP switching process of the terminal according to the DCI. Within this switching delay duration, the terminal prepares for the BWP switching, completes the BWP switching, i.e., switching the current BWP to the first BWP, and transmits service data between the terminal and the network device through the first BWP. Correspondingly, the terminal may use the BWP based on scheduling of the network device, thereby preventing conflicts with other terminal resources caused by the terminal from switching to a BWP with a relatively saturated load.

In summary, in the present disclosure, when the terminal receives a target DCI (which contains at least the first BWP) sent by the network device for triggering the terminal to perform BWP switching, the current BWP is switched to the first BWP according to the target DCI by de-enabling the timer-based BWP switching function, thereby preventing the timer-based BWP switching being triggered by the timer timeout caused by the terminal and the network device not performing data transmission within the switching delay duration, when the switching delay duration (i.e., the time required to perform the BWP switching) is greater than the timer duration. In this way, it can be ensured that the terminal may complete the BWP switching as expected by the network device and ensure that the BWP state on the terminal side is consistent with the BWP state on the network device side, thereby guaranteeing the normal scheduling of the BWP of the terminal by the network device.

In some embodiments, the de-enabling a timer-based BWP switching function according to the target DCI includes the following operations.
obtaining a target switching delay duration and the timer duration; the target switching delay duration is time required for the terminal to perform the BWP switching according to the target DCI.
de-enabling the timer-based BWP switching function in response to the target switching delay duration being greater than the timer duration.

In some embodiments, the timer duration is 2ms.

When the subcarrier interval is 15KHz, the target switching delay duration is a duration corresponding to 3 slots.

When the subcarrier interval is 30KHz, the target switching delay duration is a duration corresponding to 5 slots.

When the subcarrier interval is 60KHz, the target switching delay duration is a duration corresponding to 9 slots.

When the subcarrier interval is 120KHz, the target switching delay duration is a duration corresponding to 18 slots.

In some embodiments, after the obtaining a target switching delay duration and a timer duration, the method further includes the following operations.
enabling the timer-based BWP switching function in response to the target switching delay duration being less than the timer duration.

In some embodiments, the timer is a BWP de-activation timer (bwp-InactivityTimer).

In some embodiments, the de-enabling the timer-based BWP switching function includes at least one of the following operations.
stopping a timing function of the timer.
releasing the timer.
not triggering the BWP switching in response to the timer reaching the timer duration.

In some embodiments, after the switching a current BWP to the first BWP, the method further includes the following operations.
enabling the timer-based BWP switching function in response to completing the BWP switching according to the target DCI.

In some embodiments, the timer-based BWP switching function indicates switching the current BWP to a second BWP.

After the receiving target downlink control information (DCI) from a network device, the method further includes the following operations.
enabling the timer-based BWP switching function in response to the second BWP being the same as the first BWP.
performing the de-enabling the timer-based BWP switching function according to the target DCI in response to the second BWP being different from the first BWP.

In some embodiments, the target switching delay duration is determined by the subcarrier interval and the upstream capability of the terminal.

In other embodiments, since only when the switching delay duration is longer than the timer duration, for example, when the switching delay duration of the terminal is 3ms and the timer duration is 2ms, a new BWP switching will be triggered by causing the timer to time out during the BWP switching of the terminal because no data transmission is performed bet ween the terminal and the network device, it is possible to determine the switching delay duration and timer duration to determine whether the timer-based switching function needs to be enabled.

Referring to FIG. 5, FIG. 5 is a flowchart of a BWP switching method according to another embodiment of the present disclosure. The method may be applied to the terminal 103 as illustrated in FIG. 3. The method may include operations at blocks illustrated in FIG. 5.

At block 501: receiving target downlink control information (DCI) sent by a network device; the target DCI is configured to trigger the terminal to perform a BWP switching.

The implementation of this step may be referred to step 401, which will not be described herein.

At block 502: obtaining a target switching delay duration and a timer duration.

The target switching delay duration refers to time required for the terminal to perform the BWP switching according to the target DCI, and the target switching delay duration is determined by a subcarrier interval and an upstream capability of the terminal.

The timer has a minimum timer duration of 2ms, and the timer duration may also be 3ms, 5ms, etc.

In some embodiments, the relationship between the target switching delay duration, the subcarrier interval, and the upstream capability of the terminal is shown in Table 1, where u is the number corresponding to the subcarrier interval; the first type and the second type refer to a switching delay type of the terminal, which are determined by the upstream capability of the terminal as follows.

**Table 1**

| Subcarrier interval | µ | NR Slot length/ms | BWP Switch Delay | |
|---|---|---|---|---|
| | | | Type 1 | Type 2 |
| 15KHZ | 0 | 1 | 1 | 3 |
| 30KHZ | 1 | 0.5 | 2 | 5 |
| 60KHZ | 2 | 0.25 | 3 | 9 |
| 120KHZ | 3 | 0.125 | 4 | 18 |

Derived from Table 1, when the switching delay type of the terminal is the second type, the target switching delay duration corresponding to each subcarrier interval is greater than a minimum configuration duration of the timer (i.e., the minimum timer duration). When the subcarrier interval is 15KHz, the target switching delay duration is a duration corresponding to 3 slots, the length of each slot being 1ms, and the corresponding target switching delay duration is 3ms; when the subcarrier interval is 30KHz, the target switching delay duration is a duration corresponding to 5 slots, the length of each slot being 0.5ms, and the corresponding target switching delay duration is 2.5ms; when the subcarrier interval is 60KHz, the target switching delay duration is a duration corresponding to 9 slots, the length of each slot being 0.25ms, and the corresponding target switching delay duration is 2.25ms; when the subcarrier interval is 120KHz, the target switching delay duration is a duration corresponding to 18 slots, the length of each slot being 0.125ms, and the corresponding target switching delay duration is 2.25ms.

Exemplarily, when the switching delay type of the terminal is the first type, the target switching delay duration corresponding to each subcarrier interval is less than the minimum configuration duration of the timer (2ms); that is, when the upstream capability of the terminal is the first type, it can be ensured that the terminal can still achieve the BWP switching based on the DCI sent by the network device without the need of de-enabling the timer-based BWP switching function.

In some embodiments, the better the upstream capability of the terminal, the less the corresponding switching delay duration.

In some embodiments, when a current BWP (old BWP) and a first BWP (new BWP) correspond to different subcarrier intervals, it is then necessary to determine the target switching delay duration based on a switching delay duration with a greater value. In an exemplary case, the determining the target switching delay duration may include the following operations.
I. determining a first subcarrier interval corresponding to the current BWP and a second subcarrier interval corresponding to the first BWP.
   In some embodiments, the terminal determines the subcarrier interval corresponding to the current BWP and the first BWP, respectively, in order to determine the corresponding target switching delay duration based on the subcarrier intervals.
II. determining the target switching delay duration based on a switching delay duration corresponding to the first subcarrier interval and a switching delay duration the second subcarrier interval.

In some embodiments, when the first subcarrier interval and the second subcarrier interval are the same, the switching delay duration corresponding to the first subcarrier interval or the second subcarrier interval may be directly determined as the target switching delay duration.

For example, in a case where the switching delay type of the terminal is the second type, when the subcarrier interval corresponding to the current BWP and the first BWP is 15KHZ, the switching delay duration corresponding to the subcarrier interval is 3 slots, and the length of each slot is 1ms, i.e., the switching delay duration is 3ms, and the corresponding 3ms is determined as the target switching delay duration corresponding to the switching from the current BWP to the first BWP.

In other embodiments, when the first subcarrier interval and the second subcarrier interval are different, and different subcarrier intervals correspond to different switching delay durations, it is necessary to compare the relationship between the two switching delay durations such that the switching delay duration with a greater value is determined as the target switching delay duration.

For example, in a case where the switching delay type of the terminal is the second type, when the current BWP corresponds to a subcarrier interval of 15KHZ, the corresponding first switching delay duration is 3 slots, the length of each slot is 1ms, that is, the first switching delay duration is 3ms; when the first BWP corresponds to a subcarrier interval of 60KHZ, the corresponding second switching delay duration is 9 slots, the length of each slot is 0.25ms, that is, the second switching delay duration is 2.25ms; since 2.25ms is less than 3ms, the first switching delay duration is determined as the target switching delay duration, i.e., the target switching delay duration is 3ms.

In some embodiments, after the terminal receives the DCI sent by the network device for triggering the BWP switching, the terminal may first obtain the target switching delay duration and the timer duration as a basis for subsequently determining whether the timer-based BWP switching function is required to be de-enabled.

At block 503: de-enabling a timer-based BWP switching function in response to the target switching delay duration being greater than the timer duration.

In the related art, when the target switching delay duration is greater than the timer duration, an interruption in the BWP switching process of the terminal may occur. Therefore, in some embodiments of the present disclosure, when the terminal determines that the target switching delay duration is greater than the timer duration, in order to avoid the influence of the timer-based BWP switching function on the BWP switching process, the timer-based BWP switching function is de-enabled.

For example, when the terminal determines that the target switching delay duration is 3ms and the timer duration is 2ms, it is indicated that the terminal does not expect data transmission between the terminal and the network device during the BWP switching according to the target DCI, which causes the timer to time out and thus triggers the timer-based BWP switching. Therefore, in order to avoid the influence of the timer on the BWP switching process, the timer-based BWP switching function is required to be de-enabled.

For the specific implementation to de-enable the timer-based BWP switching function, it may include at least one of the following ways.

### I. stopping a timing function of the timer.

In some embodiments, during the BWP switching, when the timer has been reset and starts timing, the terminal directly stops the timing function of the timer, thereby preventing the timer from continuing to decrement until it times out and triggering the timer-based BWP switching function.

### II. releasing the timer.

In other embodiments, the terminal may directly release the timer without need of performing a timer reset or a timer startup.

### III. not triggering the BWP switching in response to the timer reaching the timer duration.

In other embodiments, when the terminal does not transmit or receive data during the BWP switching, the timer begins to decrement in 1ms intervals until it times out; at this time, although the terminal determines that the timer times out, it does not trigger the BWP switching.

In some embodiments, when the timer times out, the timer may be reset, i.e., the timing starts again. However, the BWP switching is not triggered during the DCI-based BWP switching, regardless of how many times the timer times out.

At block 504: enabling the timer-based BWP switching function in response to the target switching delay duration being less than the timer duration.

When the target switching delay duration is less than the timer duration, the BWP switching process based on DCI will not be affected during the BWP switching, even if the timer starts decreasing according to a preset time interval, since the terminal has completed the switching from the current BWP to the first BWP before the timer timeout. Therefore, in some embodiments, when the terminal determines that the target switching delay duration is less than the timer duration, it can be ensured that the terminal can still achieve the BWP switching in accordance with the scheduling of the network device without the need of de-enabling the timer-based BWP switching function.

For example, in a case where the terminal determines that the target switching delay duration is 3ms and the timer duration is 5ms, during the BWP switching of the terminal, since there is no data transmission between the terminal and the network device, the timer is set to start timing; since the timer duration is greater than the target switching duration, the terminal can complete the BWP switching according to DCI during the timer timeout period, i.e., the timer-based BWP switching function will not affect the BWP switching of the network device. Therefore, there is no need to de-enable the timer-based BWP switching function.

At block 505: switching the current BWP to the first BWP.

The implementation of this step may be referred to step 403, which will not be repeated herein.

In the embodiments, the relationship between the target switching delay duration and the timer duration is determined, and when the target switching delay duration is greater than the timer duration, the timer-based BWP switching function is de-enabled to avoid triggering a new BWP switching due to the timer timeout during the BWP switching of the terminal, thereby ensuring that the terminal can complete the BWP switching as expected by the network device; when the target switching delay duration is less than the timer duration, the timer-based BWP switching function is enabled to avoid frequent switchover of the timer-based BWP switching function.

In some embodiments, after the terminal de-enables the timer-based BWP switching function and completes the switching of the current BWP to the first BWP according to the DCI, the timer-based BWP switching function is required to be restored in time. In this way, after the terminal switches to the new BWP, when there is no service data transmission between the terminal and the network device for a long time, the terminal may switch to a default BWP or initial BWP to reduce the power consumption of the terminal.

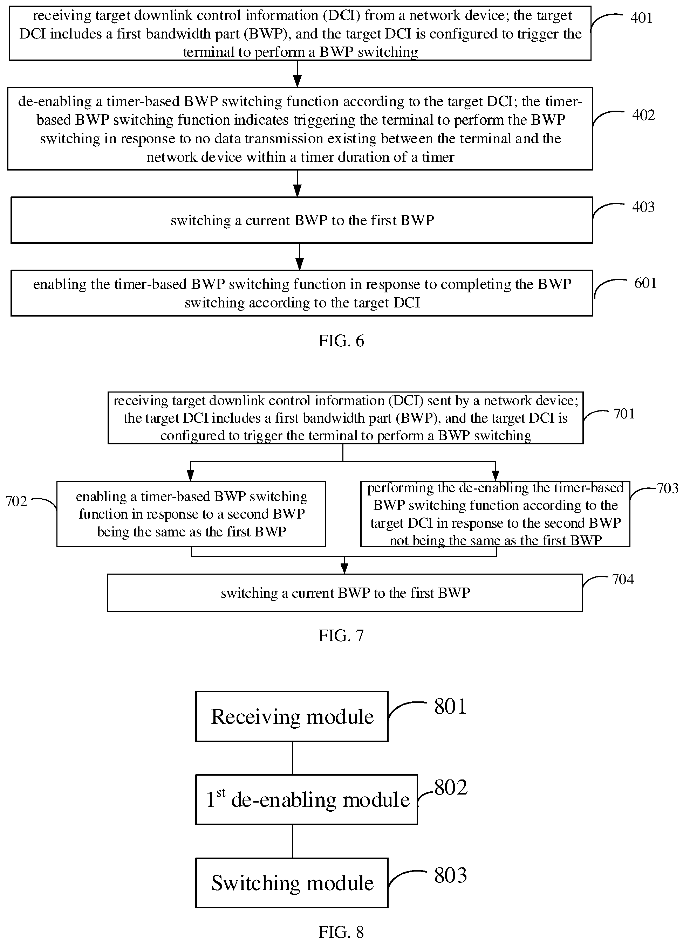

Exemplarily, based on FIG. 4, referring to FIG. 6, FIG. 6 is a flowchart of a BWP switching method according to further another embodiment of the present disclosure. The method may further include step 601.

At block 601: enabling the timer-based BWP switching function in response to completing the BWP switching according to the target DCI.

In some embodiments, after the terminal completes the BWP switching according to the target DCI, i.e., after switching from the old BWP to the new BWP, in order to avoid large power consumption of the terminal caused by the terminal not performing data transmission for a long time and being under a large bandwidth all the time, the timer-based BWP switching function is required to be enabled. In this way, when the terminal does not perform data transmission within the timer duration, it may be switched from the current BWP to the default BWP or initial BWP, thereby reducing the power consumption of the terminal.

When the terminal enables the timer-based BWP switching function, the timer is turned on or reset when there is an uplink and downlink transmission between the terminal and the network device; when there is no data transmission between the terminal and the network device, the timer is decremented according to the preset time interval until the timer timeouts, triggering a switching from the first BWP to the default BWP.

In the embodiments, by re-enabling the timer-based BWP switching function when the terminal completes the BWP switching according to the target DCI, the switching from the current BWP to the default BWP or the initial BWP may be enabled when no data transmission exists between the terminal and the network device within the timer duration, thereby reducing the power consumption of the terminal.

In other embodiments, the network device may schedule the terminal to the default BWP or the initial BWP for service transmission. In this case, the terminal performs the BWP switching according to DCI and performs the timer-based BWP switching for the same purpose without the need of de-enabling the timer-based BWP switching function, and the BWP state of the terminal and the BWP state of the network device side still maintain the same.

Referring to FIG. 7, FIG. 7 is a flowchart of a BWP switching method according to further another embodiment of the present disclosure. The method may be applied to the terminal 103 as illustrated in FIG. 3. The method may include operations at blocks illustrated in FIG. 7.

At block 701: receiving target downlink control information (DCI) sent by a network device; the target DCI includes a first bandwidth part (BWP), and the target DCI is configured to trigger the terminal to perform a BWP switching.

The implementation of this step may be referred to step 401, which will not be repeated herein.

At block 702: enabling a timer-based BWP switching function in response to a second BWP being the same as the first BWP.

In some embodiments, the timer-based BWP switching function indicates to switch the current BWP to the second BWP. In a case where the timer is bwp-InactivityTimer, the timer-based BWP switching function indicates to, in response to the timer duration corresponding to bwp-InactivityTimer timing out, switch the terminal from the current BWP to the default BWP when the terminal is configured with the default BWP, and switch the terminal from the current BWP to the initial BWP when the terminal is not configured with the default BWP. That is, the second BWP may be the default BWP or the initial BWP

To prevent the terminal switching frequently between the two states of enabling the timer-based BWP switching function and de-enabling the timer-based BWP switching function, in some embodiments, after the terminal obtains the first BWP from the target DCI, the terminal may compare the first BWP with the second BWP corresponding to the timer-based BWP switching function. When the first and second BWPs are the same, it is indicated that the purpose of DCI-based BWP switching is the same as the purpose of timer-based BWP switching. In this case, there is no need to de-enable the timer-based BWP switching function. Even if the target switching delay duration is greater than the timer duration, the terminal switches the current BWP to the second BWP by triggering the timer-based BWP switching due to the timer timeout during the BWP switching. Since the first BWP is the same as the second BWP, the BWP switching according to DCI may be achieved, converting the current BWP to the first BWP.

At block 703: performing the de-enabling the timer-based BWP switching function according to the target DCI in response to the second BWP not being the same as the first BWP.

In some embodiments, when the terminal determines that the first BWP and the second BWP are not the same, it is indicated that the purpose of the DCI-based BWP switching is not the same as the purpose of the timer-based BWP switching. In this case, it is further necessary to determine whether there is need to de-enable the timer-based BWP switching by determining the relationship between the target switching delay duration and the timer duration, in order to avoid triggering a new BWP switching due to the timer timeout when the target switching delay duration is greater than the timer duration. For example, when the target switching delay duration is greater than the timer duration, the timer-based BWP switching function is de-enabled; when the target switching delay duration is less than the timer duration, the timer-based BWP switching function is enabled, all of which may realize the terminal to complete the BWP switching indicated by the network device.

The determining whether it is necessary to de-enable the timer-based BWP switching function according to the DCI may be referred to the above implementation, which will not be repeated herein.

At block 704: switching a current BWP to the first BWP.

The implementation of this step may be referred to step 403, which will not be repeated herein.

In the embodiments, the terminal determines the relationship between the first BWP in the received DCI and the default BWP (or initial BWP), and when the first BWP is the same as the default BWP, it is indicated that the purpose of DCI-based BWP switching is the same as the purpose of timer-based BWP switching, such that there is no need to de-enable the timer-based BWP switching function; when the first BWP is not the same as the default BWP, it is indicated that the purpose of DCI-based BWP switching and the purpose of timer-based BWP switching are not the same, such that it is necessary to determine whether there is need to de-enable the timer-based BWP switching function by determining the target switching delay duration and the timer duration to further ensure the normal BWP scheduling of the terminal by the network device.

Referring to FIG. 8, FIG. 8 is a structural block view of a BWP switching apparatus according to an embodiment of the present disclosure. The apparatus may be implemented as all or part of a terminal through software, hardware, or a combination of both. The apparatus includes the following components.

A receiving module 801, configured to receive target downlink control information (DCI) from a network device; the target DCI includes a first bandwidth part (BWP), and the target DCI is configured to trigger the terminal to perform a BWP switching.

A first de-enabling module 802, configured to de-enable a timer-based BWP switching function according to the target DCI; the timer-based BWP switching function indicates triggering the terminal to perform the BWP switching in response to no data transmission existing between the terminal and the network device within a timer duration of a timer.

A switching module 803, configured to switch a current BWP to the first BWP.

In some embodiments, the first de-enabling module 802 includes the following components.

An obtaining unit, configured to obtain a target switching delay duration and the timer duration; the target switching delay duration is time required for the terminal to perform the BWP switching according to the target DCI.

A de-enabling unit, configured to de-enable the timer-based BWP switching function in response to the target switching delay duration being greater than the timer duration.

In some embodiments, the timer duration is 2ms.

When the subcarrier interval is 15KHz, the target switching delay duration is a duration corresponding to 3 slots.

When the subcarrier interval is 30KHz, the target switching delay duration is a duration corresponding to 5 slots.

When the subcarrier interval is 60KHz, the target switching delay duration is a duration corresponding to 9 slots.

When the subcarrier interval is 120KHz, the target switching delay duration is a duration corresponding to 18 slots.

In some embodiments, the apparatus further includes the following components.

A first enabling module, configured to enable the timer-based BWP switching function in response to the target switching delay duration being less than the timer duration.

In some embodiments, the timer is a BWP de-activation timer (bwp-InactivityTimer).

In some embodiments, the first de-enabling module includes at least one of the following components.

A stop timing unit, configured to stop a timing function of the timer.

A releasing unit, configured to release the timer.

A triggering unit, configured to not trigger the BWP switching in response to the timer reaching the timer duration.

In some embodiments, the apparatus further includes the following components.

A second enabling module, configured to enable the timer-based BWP switching function in response to completing the BWP switching according to the target DCI.

In some embodiments, the timer-based BWP switching function indicates switching the current BWP to a second BWP.

After the receiving target downlink control information (DCI) from a network device, the apparatus further includes the following components.

A third enabling module, configured to enable the timer-based BWP switching function in response to the second BWP being the same as the first BWP.

A second de-enabling module, configured to perform the de-enabling the timer-based BWP switching function according to the target DCI in response to the second BWP being different from the first BWP.

In some embodiments, the target switching delay duration is determined by a subcarrier interval and an upstream capability of the terminal.

In summary, in the present disclosure, when the terminal receives a target DCI (which contains at least the first BWP) sent by the network device for triggering the terminal to perform BWP switching, the current BWP is switched to the first BWP according to the target DCI by de-enabling the timer-based BWP switching function, thereby preventing the timer-based BWP switching being triggered by the timer timeout caused by the terminal and the network device not performing data transmission within the switching delay duration, when the switching delay duration (i.e., the time required to perform the BWP switching) is greater than the timer duration. In this way, it can be ensured that the terminal may complete the BWP switching as expected by the network device and ensure that the BWP state on the terminal side is consistent with the BWP state on the network device side, thereby guaranteeing the normal scheduling of the BWP of the terminal by the network device.

It should be noted that the apparatus provided by the above embodiments is only illustrated by the division of the above-mentioned functional modules in realizing its functions. In practice, the above-mentioned functions may be assigned to different functional modules according to the needs, i.e., the internal structure of the apparatus may be divided into different functional modules to accomplish all or part of the above-described functions. In addition, the apparatus provided by the above embodiments belongs to the same idea as the method embodiments, and its specific implementation process is detailed in the method embodiments, which will not be repeated here.

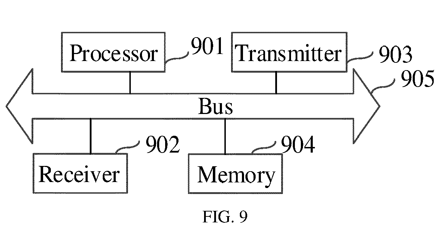

Referring to FIG. 9, FIG. 9 is a structural block view of a terminal according to an embodiment of the present disclosure. The terminal includes a processor 901, a receiver 902, a transmitter 903, a memory 904, and a bus 905.

The processor 901 includes one or more processing cores, and the processor 901 performs various functional applications as well as information processing by running software programs as well as modules.

The receiver 902 and transmitter 903 may be implemented as a communication component, which may be a communication chip.

The memory 904 is connected to the processor 901 via the bus 905.

The memory 904 may be configured to store at least one instruction, and the processor 901 is configured to execute the at least one instruction to implement the various steps in the method embodiments described above.

In addition, the memory 904 may be implemented by any type of volatile or non-volatile storage device or a combination thereof, the volatile or non-volatile storage devices including, but not limited to: disk or optical disk, electrically-erasable programmable read-only memory (EEPROM), erasable programmable read only memory (EPROM), static random-access memory (SRAM), read-only memory (ROM), magnetic memory, flash memory, programmable read-only memory (PROM).

In some embodiments, the present disclosure further provides a computer-readable storage medium storing at least one instruction, at least one program, code set, or instruction set. The at least one instruction, at least one program, code set, or instruction set is loaded and executed by the processor to implement the BWP switching method provided by each of the method embodiments described above for execution by the terminal.

According to an aspect of the present disclosure, there is further provided a computer program product or computer program, the computer program product or computer program including a computer instruction stored in a computer-readable storage medium. A processor of the terminal reads the computer instruction from the computer-readable storage medium, and the processor executes the computer instruction such that the terminal performs the BWP switching method provided in the implementations of the above aspect.

Those skilled in the art can understand that all or some of the steps to achieve the above embodiments may be accomplished by hardware, or the relevant hardware may be instructed to do so by a program. The program may be stored in a computer-readable storage medium, which may be a read-only memory, disk or CD-ROM, etc.

The above mentioned are only some embodiments of the present disclosure and are not intended to limit the present disclosure, and any modifications, equivalent replacements, improvements, etc. made within the spirit and principles of the present disclosure shall be included within the scope of the present disclosure.

## Claims

1. A bandwidth part (BWP) switching method, **characterized by** comprising:
receiving target downlink control information (DCI) from a network device; wherein the target DCI comprises a first BWP, and the target DCI is configured to trigger a terminal to perform a BWP switching;
de-enabling a timer-based BWP switching function according to the target DCI; wherein the timer-based BWP switching function indicates triggering the terminal to perform the BWP switching in response to no data transmission existing between the terminal and the network device within a timer duration of a timer; and
switching a current BWP to the first BWP

2. The method according to claim 1, wherein the de-enabling a timer-based BWP switching function according to the target DCI comprises:
obtaining a target switching delay duration and the timer duration; wherein the target switching delay duration is time required for the terminal to perform the BWP switching according to the target DCI; and
de-enabling the timer-based BWP switching function in response to the target switching delay duration being greater than the timer duration.

3. The method according to claim 2, wherein the timer duration is 2ms;
in condition of a subcarrier interval being 15KHz, the target switching delay duration is a duration corresponding to 3 slots;
in condition of the subcarrier interval being 30KHz, the target switching delay duration is a duration corresponding to 5 slots;
in condition of the subcarrier interval being 60KHz, the target switching delay duration is a duration corresponding to 9 slots;
in condition of the subcarrier interval being 120KHz, the target switching delay duration is a duration corresponding to 18 slots.

4. The method according to claim 2, after the obtaining a target switching delay duration and the timer duration, further comprising:
enabling the timer-based BWP switching function in response to the target switching delay duration being less than the timer duration.

5. The method according to any one of claims 1-4, wherein the timer is a BWP de-activation timer (bwp-InactivityTimer).

6. The method according to any one of claims 1-4, wherein the de-enabling the timer-based BWP switching function comprises at least one of:
stopping a timing function of the timer;
releasing the timer; and
not triggering the BWP switching in response to the timer reaching the timer duration.

7. The method according to any one of claims 1-4, after the switching a current BWP to the first BWP, further comprising:
enabling the timer-based BWP switching function in response to completing the BWP switching according to the target DCI.

8. The method according to any one of claims 1-4, wherein the timer-based BWP switching function further indicates switching the current BWP to a second BWP;
after the receiving target DCI from a network device, further comprising:
enabling the timer-based BWP switching function in response to the second BWP being the same as the first BWP; and
performing the de-enabling the timer-based BWP switching function according to the target DCI in response to the second BWP being different from the first BWP

9. The method according to claim 2, wherein the target switching delay duration is determined by a subcarrier interval and an upstream capability of the terminal.

10. A bandwidth part (BWP) switching apparatus, comprising:
a receiving module, configured to receive target downlink control information (DCI) from a network device; wherein the target DCI comprises a first BWP, and the target DCI is configured to trigger the terminal to perform a BWP switching;
a first de-enabling module, configured to de-enable a timer-based BWP switching function according to the target DCI; wherein the timer-based BWP switching function indicates triggering the terminal to perform the BWP switching in response to no data transmission existing between the terminal and the network device within a timer duration of a timer; and
a switching module, configured to switch a current BWP to the first BWP.

11. The apparatus according to claim 10, wherein the first de-enabling module comprises:
an obtaining unit, configured to obtain a target switching delay duration and the timer duration; wherein the target switching delay duration is time required for the terminal to perform the BWP switching according to the target DCI; and
a de-enabling unit, configured to de-enable the timer-based BWP switching function in response to the target switching delay duration being greater than the timer duration.

12. The apparatus according to claim 11, wherein the timer duration is 2ms;
in condition of a subcarrier interval being 15KHz, the target switching delay duration is a duration corresponding to 3 slots;
in condition of the subcarrier interval being 30KHz, the target switching delay duration is a duration corresponding to 5 slots;
in condition of the subcarrier interval being 60KHz, the target switching delay duration is a duration corresponding to 9 slots;
in condition of the subcarrier interval being 120KHz, the target switching delay duration is a duration corresponding to 18 slots.

13. The apparatus according to claim 11, further comprising:
a first enabling module, configured to enable the timer-based BWP switching function in response to the target switching delay duration being less than the timer duration.

14. The apparatus according to any one of claims 10-13, wherein the timer is a BWP de-activation timer (bwp-InactivityTimer).

15. The apparatus according to any one of claims 10-13, wherein the first de-enabling module comprises at least one of:
a stop timing unit, configured to stop a timing function of the timer;
a releasing unit, configured to release the timer; and
a triggering unit, configured to not trigger the BWP switching in response to the timer reaching the timer duration.

16. The apparatus according to any one of claims 10-13, further comprising:
a second enabling module, configured to enable the timer-based BWP switching function in response to completing the BWP switching according to the target DCI.

17. The apparatus according to any one of claims 10-13, wherein the timer-based BWP switching function indicates switching the current BWP to a second BWP;
the apparatus further comprises:
a third enabling module, configured to enable the timer-based BWP switching function in response to the second BWP being the same as the first BWP; and
a second de-enabling module, configured to perform the de-enabling the timer-based BWP switching function according to the target DCI in response to the second BWP being different from the first BWP.

18. The apparatus according to claim 11, wherein the target switching delay duration is determined by a subcarrier interval and an upstream capability of the terminal.

19. A terminal, **characterized by** comprising:
a processor;
a transceiver, connected to the processor; and
a memory, storing an instruction executable by the processor;
wherein the processor is configured to load and execute the instruction for performing the BWP switching method according to any one of claims 1-9.

20. A computer-readable storage medium, **characterized by** storing an executable instruction; wherein the executable instruction is loaded and executed by a processor to perform the BWP switching method according to any one of claims 1-9.
